# EUROPÄISCHE PATENTSCHRIFT

(11) **EP 2 138 051 B1**
(45) Veröffentlichungstag und Bekanntmachung des Hinweises auf die Patenterteilung: **15.08.2012**
(21) Anmeldenummer: 09008257.9
(22) Anmeldetag: 24.06.2009
(51) Int. Cl.: A23L 1/0522, A23L 1/09, A23G 3/42, A23G 3/48, A23C 20/02

(54) **Mischungen verschiedener Stärken und Verwendung derselben**
Mixtures of different starches and its use
Mélanges d'amidon et leur utilisation

(30) Priorität: 26.06.2008 DE 102008030436
(43) Veröffentlichungstag der Anmeldung: 30.12.2009
(73) Patentinhaber: Emsland-Stärke GmbH, 49824 Emlichheim (DE)
(72) Erfinder: Herrmann, Martina, 49824 Emlichheim (DE)
(74) Vertreter: Scholz, Volker

(56) Entgegenhaltungen:
- EP-A- 0 240 313
- EP-A- 0 363 741
- EP-A- 1 002 465
- WO-A-00/44241
- DE-A1- 19 912 009
- DE-C1- 4 031 162
- GB-A- 2 426 219
- US-A- 5 034 239
- US-A- 5 773 069
- 'Ullmann's Enzyklopädie', Bd. 22, WILEY Seiten 174 - 177

## Beschreibung

Die vorliegende Erfindung betrifft eine Mischung verschiedener Stärken, eine damit hergestellte Süßigkeit oder ein Käseimitat, sowie ein Herstellungsverfahren.

Auf Stärke basierte gelatinisierte Süßigkeiten sind beispielsweise aus EP 1645196 B1 bekannt, die eine verflüssigte und stabilisierte Hülsenfrucht-Stärke mit einem Gehalt an Amylose von 25 bis 40%, und ein oder mehrere Süßungsmittel enthalten.

Es wurde festgestellt, dass insbesondere gelatinisierte Süßigkeiten in Form Gummi- oder Geleeartikeln, Lakritz, Dragees, Kaubonbons oder dergleichen, vom Verbraucher besonders bevorzugt werden, wenn die Süßigkeiten möglichst klar sind und eine gute Elastizität aufweisen. Süßigkeiten aus dem Stand der Technik sind diesbezüglich noch verbesserungsfähig.

Aus der DE 199 12 009 A1 sind Glasnudeln bekannt, die hergestellt werden durch Verwendung von Stärke mit einem Amylosegehalt von mindestens 30% und/oder einem Verhältnis von End-zu-Peak-Viskosität von mindestens 0,7. Dabei ist wesentlich, dass eine gentechnisch modifizierte Stärke eingesetzt wird, wobei Stärkemischungen, beispielsweise aus Mungbohnenstärke und Kartoffelstärke, eingesetzt werden können.

Aus der US 5,773,069 ist ein Verfahren zur Herstellung von Glasnudeln bekannt. Es können Mungbohnenstärke, Kartoffelstärke und Mischungen derselben eingesetzt werden.

Aus der WO 00/44241 A1 ist eine Stärkezusammensetzung bekannt, die eine erste Fraktion umfassend vernetzte Stärke und wenigstens eine zweite Fraktion umfassend depolymerisierte Stärke umfasst.

Es ist somit eine Aufgabe der vorliegenden Erfindung, eine Süßigkeit bereitzustellen, die die Nachteile aus dem Stand der Technik überwindet, insbesondere eine verbesserte Klarheit und Elastizität zeigt.

Es sollen ferner Ausgangsmaterialien zur Herstellung einer Süßigkeit sowie ein Herstellungsverfahren für die Süßigkeit bereitgestellt werden.

Desweiteren sollen andere Anwendungsbereiche der für die Herstellung der Süßigkeiten eingesetzten Ausgangsmaterialien aufgezeigt werden.

Die Aufgabe der vorliegenden Erfindung wird nun gelöst durch die Bereitstellung einer Mischung aus einer verflüssigten und stabilisierten Hülsefrucht-Stärke und zumindest einer verflüssigten und/oder stabilisierten Stärke anderen Ursprungs mit einem bevorzugten Mischungsverhältnis von 95:5 bis 5:95 Gew.-% (auf Basis der gesamten Mischung) an der verflüssigten stabilisierten Hülsenfrucht-Stärke und der verflüssigten und/oder stabilisierten Stärke anderen Ursprungs. Diese Mischung kann vorzugsweise zur Herstellung einer Süßigkeit eingesetzt werden, die ferner ein oder mehrere Süßungsmittel enthält.

Vorzugsweise ist die verflüssigte stabilisierte Hülsenfrucht-Stärke eine Erbsenstärke.

Besonders bevorzugt umfasst die verflüssigte und/oder stabilisierte Stärke anderen Ursprungs eine Kartoffelstärke und/oder Tapiokastärke.

Ebenfalls kann vorgesehen sein, dass zumindest eine der eingesetzten Stärken getrocknet und/oder vorverkleistert ist.

Zumindest eine der Stärken kann über Sprühtrocknung hergestellt werden.

Erfindungsgemäß ebenfalls bevorzugt ist, dass die verflüssigte und stabilisierte Hülsenfrucht-Stärke kaltquellend ist. Ebenfalls bevorzugt ist, dass die verflüssigte und/oder stabilisierte Stärke anderen Ursprungs kaltquellend ist.

Auch kann vorgesehen sein, dass zumindest eine der Stärken dextriniert ist.

Eine bevorzugte Ausführungsform der erfindungsgemäßen Mischung zeichnet sich ferner dadurch aus, dass die verflüssigte Stärke acetyliert oder hydroxypropyliert ist.

Ein erfindungsgemäßer Gegenstand ist eine gelatinierte Süßigkeit, die eine erfindungsgemäße Mischung der verschiedenen Stärken sowie ein oder mehrer Süßungsmittel enthält.

Dabei ist bevorzugt, dass die gelatinisierte Süßigkeit 0,5 bis 60 Gew.-%, bevorzugter 0,5 bis 25 Gew.-% an Stärke enthält.

Auch wird vorgeschlagen, dass das Süßungsmittel ein Zucker ist, der ausgewählt ist aus der Gruppe bestehend aus Mono-, Di- oder Trisacchariden, Oligo- und Polysacchariden, einzeln oder als Mischung.

Das Süßungsmittel kann dabei bevorzugt ausgewählt werden aus der Gruppe bestehend aus Maltit, Sorbit, Mannit, Iditol, Erythrit, Xylit, Sorbit-, Maltit-Sirupen, hydrierten Glukose-Sirupen, einzeln oder als Mischung.

Die erfindungsgemäße Süßigkeit liegt bevorzugt als Gummi- oder Geleeartikel, Lakritz, Dragrée, Kaubonbon oder dergleichen vor.

Erfindungsgemäß ist ebenfalls ein Käseimitat, dass eine Mischung der verschiedenen Stärken enthält.

Schließlich wird erfindungsgemäß ein Verfahren zur Herstellung einer erfindungsgemäßen gelatinisierten Süßigkeit vorgeschlagen, wobei es die Schritte umfasst:
- Herstellen einer Zusammenmischung, die eine Mischung aus einer verflüssigten und stabilsierten Hülsenfrucht-Stärke und zumindest einer verflüssigten und/oder stabilisierten Stärke anderen Ursprungs mit einem bevorzugten Mischungsverhältnis von 95:5 bis 5:95 Gew.-% sowie mindestens ein Süßungsmittel und Wasser umfasst,
- Kochen der Zusammenmischung bei einer Temperatur zwischen 100 und 150°C, bis ein im wesentlichen eingetrocknetes Material erhalten wird,
- Formen der gekochten Zusammenmischung und gegebenenfalls Aufteilen der Zusammenmischung, und
- Rückgewinnen der so erhaltenen gelatinisierten Süßigkeit.

Überraschenderweise wurde festgestellt, dass bei Einsatz der erfindungsgemäßen Mischung zur Herstellung einer erfindungsgemäßen gelatinisierten Süßigkeit oder eines Käseimitats eine höhere bzw. verbesserte Klarheit und eine verbesserte Elastizität des Produkts erzielt werden können, wenn anstelle der reinen verflüssigten und stabilisierten Hülsenfrucht-Stärke eine Mischung aus verflüssigter stabilisierter Hülsenfrucht-Stärke und einer weiteren verflüssigten und/oder stabilisierten Stärke anderen Ursprungs verwendet wird.

Wird als die eine Hülsenfrucht-Stärke Erbsenstärke ausgewählt, kann als Stärke anderen Ursprungs auch eine andere Hülsenfrucht-Stärke als Erbsenstärke ausgewählt werden.

Ebenfalls kann vorgesehen sein, dass sämtliche Stärken, bevorzugt die Stärken anderen Ursprungs, modifizierte Stärke sein können.

Weitere Vorteile und Merkmale der Erfindung ergeben sich aus der folgenden detaillierten Beschreibung bevorzugter Ausführungsformen anhand der beigefügten Zeichnungen, in denen
- Fig. 1: eine photographische Aufnahme einer nach dem Stand der Technik hergestellten Süßigkeit und einer erfindungsgemäßen Süßigkeit zur Veranschaulichung der Klarheit der Süßigkeiten ist, und
- Fig. 2: eine Texturvergleichsmessung zwischen einer mit Hülsenfrucht-Stärke aus dem Stand der Technik hergestellten Süßigkeit und einer unter Verwendung der erfindungsgemäßen Mischung hergestellten Süßigkeit ist.

Eine bevorzugte Rezeptur zur Herstellung einer Süßigkeit ist wie folgt (alle Angaben, sofern nicht anderweitig angegeben, beziehen sich in dieser Anmeldung auf Gewichtsprozent):
5-30% verflüssigte stabilisierte Erbsenstärke
5-30% verflüssigte stabilisierte Kartoffelstärke
10-40% Glukosesirup (42 DE)
10-40% Zucker
10-20% Wasser.

Eine konkretere Rezeptur zur Herstellung einer erfindungsgemäßen Süßigkeit ist wie folgt:

| | |
|---|---|
| Verflüssigte und stabilisierte Erbsenstärke | 10%; |
| Verflüssigte und stabilisierte Kartoffelstärke | 5%; |
| Zucker | 31%; |
| Glukosesirup (42 DE) | 33%; |
| Wasser | 20%; |
| Zitronensäure (50%) | 12 ml/kg; |
| Aroma | nach Bedarf. |

Aus den oben aufgeführten Komponenten wurde eine gelatinisierte Süßigkeit hergestellt, indem die Komponenten zunächst bei einer Temperatur von etwa 60°C zu einer Zusammenmischung vermischt wurden. Diese Zusammenmischung wurde dann bei einer Temperatur von etwa 135°C bei einem Druck von 2,5 bar gekocht. Anschließend wurde die gekochte Zusammenmischung bei einer Temperatur von 80°C in bereitgestellte Formen gegossen, wobei die Konzentration der Lösung 70-74° Bx betrug. Die Einheit "°Bx" steht für die Menge der Trockensubstanz, die über eine Refraktometermessung bestimmt wird. Anschließend wurde die gelatinisierte Süßigkeit für 20-30 Stunden bei 20-70°C getrocknet, woraufhin sie aus den Formen entnommen werden konnte.

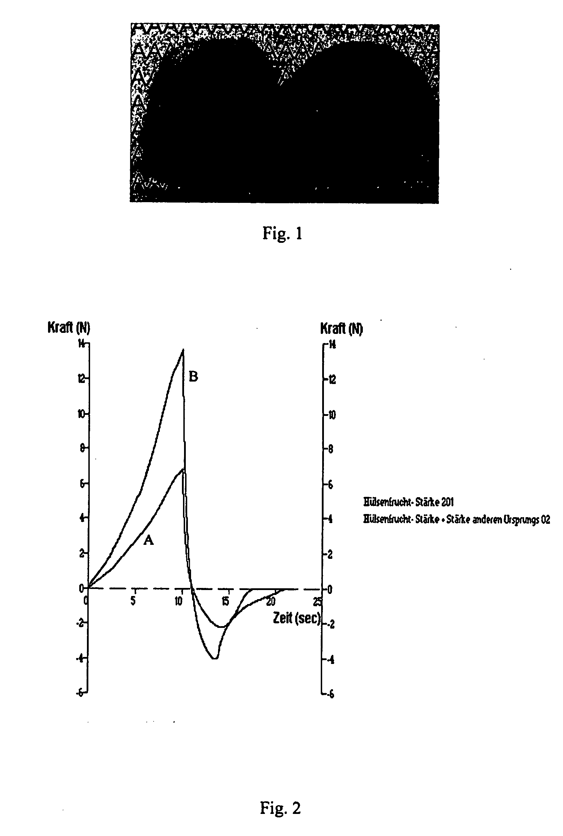

Figur 1 zeigt eine photographische Aufnahme einer Süßigkeit, die mit einer Hülsenfrucht-Stärke aus dem Stand der Technik hergestellt worden ist (links), und eine Aufnahme einer erfindungsgemäßen Süßigkeit (rechts) gemäß obiger Rezeptur. Wie deutlich zu erkennen ist, ist die Auflage bei der erfindungsgemäßen Süßigkeit durch diese hindurch deutlich besser zu erkennen (AAA...), dass die erfindungsgemäße Süßigkeit eine deutlich verbesserte Klarheit zeigt.

Die in Figur 1 gezeigten Süßigkeiten wurden auch hinsichtlich ihrer Elastizität verglichen. Zu diesem Zweck wurde eine Texturmessung beider Süßigkeiten vorgenommen, deren Ergebnis in Figur 2 gezeigt ist.

Für die Durchführung der Texturmessung wurde ein Texture Analyzer eingesetzt und die folgenden Parameter verwendet:

Vorgeschwindigkeit: 1,5 mm/sek; Testgeschwindigkeit: 1,0 mm/sek; Rückgeschwindigkeit: 1,0 mm/sek; Zielparameter:Weg; Kraft:100,0 g; Weg: 10,0 mm; Verformung/Strain: 10,0%; Auslösewert: Auto (Kraft); Auslösekraft: 5,0 g; Werkzeug: P/2N-Nadel; Messpunkte pro Sekunde: 200.

Die mit "A" bezeichnete Kurve zeigt dabei das Ergebnis bei Einsatz einer erfindungsgemäßen Mischung verschiedener Stärken zur Herstellung einer Süßigkeit während die mit "B" bezeichnete Kurve die Ergebnisse der Texturmessung für die Süßigkeit nach dem Stand der Technik zeigt. Beide Süßigkeiten wurden in gleichen Konzentrationen und unter gleichen Trocknungsbedingungen verarbeitet.

Der Einsatz der erfindungsgemäßen Mischung der Stärken führt zu einer erhöhten Elastizität, die sich in der Texturkurve durch den längeren Auslauf erkennen lässt, d.h. einem späteren Erreichen des Nullpunkts.

Ein erfindungsgemäßes Käseimitat kann mit den folgenden Bestandteilen hergestellt werden.

| | |
|---|---|
| Verflüssigte und stabilisierte Erbsenstärke | 11,7% |
| Verflüssigte und stabilisierte Kartoffelstärke 1 | 7,8% |
| Modifizierte Kartoffelstärke 2 | 3,9% |
| Modifizierte Kartoffelstärke 3 | 1,2% |
| Pflanzliches Fett | 19,5% |
| Salz | 3,5% |
| Wasser | 52,4% |
| Käse-Aroma | nach Bedarf |

Zur Herstellung des Käseimitats wird das Fett in einem Stephan-Mixer erhitzt, bis es geschmolzen ist. Die Trockenstoffe werden mit Wasser vermischt und dann zum Fett zugegeben. Langsam wird bis zu einer Temperatur von über 80°C erhitzt und dort für etwa 5 Minuten gehalten. Anschließend wird die erhaltene Masse abgefüllt und dann abkühlen gelassen.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Mischung aus einer verflüssigten und stabilisierten Hülsenfrucht-Stärke und zumindest einer verflüssigten und/oder stabilisierten Stärke anderen Ursprungs mit einem Mischungsverhältnis von 95:5 bis 5:95 Gewichtsprozent (auf Basis der gesamten Mischung) an der verflüssigten stabilisierten Hülsenfrucht-Stärke und der verflüssigten und/oder stabilisierten Stärke anderen Ursprungs, bevorzugt einem Mischungsverhältnis von 70:30 bis 30:70 Gewichtsprozent.

2. Mischung nach Anspruch 1, wobei die verflüssigte und stabilisierte Hülsenfruchtstärke eine Erbsenstärke ist.

3. Mischung nach Anspruch 1 oder 2, wobei die Stärke anderen Ursprungs eine Kartoffelstärke und/oder Tapiokastärke umfasst.

4. Mischung nach einem der vorangehenden Ansprüche, wobei zumindest eine der eingesetzten Stärken getrocknet und/oder vorverkleistert ist.

5. Mischung nach einem der vorangehenden Ansprüche, wobei die verflüssigte und stabilisierte Hülsenfrucht-Stärke kaltquellend ist.

6. Mischung nach einem der vorangehenden Ansprüche, wobei die verflüssigte und/oder stabilisierte Stärke anderen Ursprungs kaltquellend ist.

7. Mischung nach einem der vorangehenden Ansprüche, wobei zumindest eine der Stärken dextriniert ist.

8. Mischung nach einem der vorangehenden Ansprüche , wobei verflüssigte Stärke acetyliert oder hydroxypropyliert ist.

9. Gelatinisierte Süßigkeit, wobei sie eine Mischung nach einem der vorangehenden Ansprüche sowie ein oder mehrere Süßungsmittel enthält.

10. Süßigkeit nach Anspruch 9, wobei sie 0,5 bis 60 Gew.-%, bevorzugter 0,5 bis 25 Gew.-% an Stärke enthält.

11. Süßigkeit nach einem der Ansprüche 9 oder 10, wobei das Süßungsmittel ein Zucker ist, der ausgewählt ist aus der Gruppe bestehend aus Mono-, Di- oder Trisacchariden, Oligo- und Polysacchariden, einzeln oder als Mischung.

12. Süßigkeit nach einem der Ansprüche 9 bis 11, wobei das Süßungsmittel ausgewählt ist aus der Gruppe bestehend aus Maltit, Sorbit, Mannit, Iditol, Erythrit, Xylit, Sorbit-, Maltit-Sirupen, hydrierten Glukose-Sirupen, einzeln oder als Mischung.

13. Süßigkeit nach einem der Ansprüche 9 bis 12, wobei diese ein Gummi- oder Geleeartikel, Lakritz, Dragée, Kaubonbon oder dergleichen ist.

14. Käseimitat, enthaltend eine Mischung nach einem der Ansprüche 1 bis 8.

15. Verfahren zur Herstellung einer gelatinisierten Süßigkeit nach einem der Ansprüche 9 bis 13, wobei es die Schritte umfasst:
- Herstellen einer Zusammenmischung umfassend mindestens eine Mischung nach einem der Ansprüche 1 bis 8 und mindestens ein Süßungsmittel und Wasser,
- Kochen der Zusammenmischung bei einer Temperatur zwischen 100 und 150°C, bis ein im wesentlichen eingetrocknetes Material erhalten wird,
- Formen der gekochten Zusammenmischung und gegebenenfalls Aufteilen der Zusammenmischung, und
- Rückgewinnen der so erhaltenen gelatinisierten Süßigkeit.

## Claims

1. Mixture of a liquefied and stabilised legume starch and at least one liquefied and/or stabilised starch of other origin with a mixing ratio of 95:5 or 5:95 weight percent (based on the total mixture) of the liquefied stabilised legume starch and the liquefied and/or stabilised starch of other origin, preferably a mixing ratio of 70:30 to 30:70 weight percent.

2. Mixture according to claim 1, wherein the liquefied and stabilised legume starch is a pea starch.

3. Mixture according to claim 1 or 2, wherein the starch of other origin is a potato starch and/or a tapioca starch.

4. Mixture according to any of the preceding claims, wherein at least one of the starches used is dried and/or pre-pasted.

5. Mixture according to any of the preceding claims, wherein the liquefied and stabilised legume starch is cold swelling.

6. Mixture according to any of the preceding claims, wherein the liquefied and/or stabilised starch of other origin is cold swelling.

7. Mixture according to any of the preceding claims, wherein at least one of the starches is dextrinated.

8. Mixture according to any of the preceding claims, wherein liquefied starch is acetylated or hydroxypropylated.

9. Gelatinised sweet containing a mixture according to any of the preceding claims together with one or more sweeteners.

10. Sweet according to claim 9 containing 0.5 to 60 w.%, preferably 0.5 to 25 w.% starch.

11. Sweet according to any of claims 9 or 10, wherein the sweet contains a sugar which is selected from the group comprising mono-, di- or trisaccharides, oligo- and polysaccharides, individually or as a mixture.

12. Sweet according to any of claims 9 to 11, wherein the sweetener is selected from the group comprising maltite, sorbite, mannite, iditol, erythrite, xylite, sorbite and maltite syrups, hydrated glucose syrups, individually or as a mixture.

13. Sweet according to any of claims 9 to 12, wherein this is a gum or gel article, liquorice, sugar-coated sweet, chewing sweet or similar.

14. Imitation cheese containing a mixture according to any of claims 1 to 8.

15. Method for production of a gelatinised sweet according to any of claims 9 to 13, comprising the steps:
- production of a commixture comprising at least one mixture according to any of claims 1 to 8 and at least one sweetener and water,
- cooking the commixture at a temperature between 100°C and 150°C until a substantially dried material is obtained,
- forming the cooked commixture and where applicable division of the commixture, and
- recovery of the resulting gelatinised sweet.

## Revendications

1. Mélange constitué d'un amidon de légumineuse liquéfié et stabilisé et d'au moins un amidon d'origine différente liquéfié et/ou stabilisé avec un rapport de mélange de 95 : 5 à 5 : 95 en pourcentage de poids (sur la base du mélange total), de préférence dans un rapport de mélange de 70 : 30 à 30 : 70 en pourcentage de pois, en amidon de légumineuse liquéfié et stabilisé et en amidon d'origine différente liquéfié et/ou stabilisé.

2. Mélange selon la revendication 1 où l'amidon de légumineuse liquéfié et stabilisé est un amidon de pois.

3. Mélange selon les revendications 1 ou 2 où l'amidon d'origine différente comprend un amidon de pomme de terre et/ou un amidon de tapioca.

4. Mélange selon l'une des revendications précédentes où au moins l'un des amidons employé est séché et/ou prégélifié.

5. Mélange selon l'une des revendications précédentes où l'amidon de légumineuse liquéfié et stabilisé peut gonfler à froid.

6. Mélange selon l'une des revendications précédentes où l'amidon d'origine différente peut gonfler à froid.

7. Mélange selon l'une des revendications précédentes où au moins l'un des amidons est dextrinisé.

8. Mélange selon l'une des revendications précédentes où l'amidon liquéfié est acétylé ou hydroxypropylé.

9. Confiserie gélatinisée, celle-ci contenant un mélange selon l'une des revendications précédentes ainsi qu'un ou plusieurs produits édulcorants.

10. Confiserie selon la revendication 9, celle-ci contenant de 0,5 à 60 % en poids, de préférence de 0,5 à 25 % en poids d'amidon.

11. Confiserie selon l'une des revendications 9 ou 10, le produit édulcorant étant un sucre qui est choisi dans le groupe constitué par des mono-, di- ou trisaccharides, des oligo- et polysaccharides, employé seul ou en mélange.

12. Confiserie selon l'une des revendications de 9 à 11 où le produit édulcorant est choisi dans le groupe constitué par le maltitol, le sorbitol, le mannitol, l'iditol, l'érythritol, le xylitol, des sirops de sorbitol, de maltitol, des sirops de glucose hydratés, employé seul ou en mélange.

13. Confiserie selon l'une des revendications de 9 à 12 celle-ci étant un article de gomme ou de gelée, une réglisse, une dragée, un bonbon à mâcher ou un similaire.

14. Imitation de fromage contenant un mélange selon l'une des revendications de 1 à 8.

15. Procédé de fabrication d'une confiserie gélatinisée selon l'une des revendications de 9 à 13, celui-ci comprenant les étapes :
- de fabrication d'un mélange de composition comportant au moins un mélange selon l'une des revendications de 1 à 8 et au moins un produit édulcorant et de l'eau,
- de cuisson du mélange de composition à une température entre 100 et 150 °C jusqu'à ce qu'un produit globalement épaissi par la cuisson soit obtenu,
- de moulage du mélange de composition, et éventuellement de division du mélange de composition, et
- de récupération de la confiserie gélatinisée ainsi obtenue.
